# EUROPÄISCHE PATENTANMELDUNG

(11) **EP 0 684 296 A1**
(43) Veröffentlichungstag der Anmeldung: **29.11.1995**
(21) Anmeldenummer: 95105687.8
(22) Anmeldetag: 14.04.1995
(51) Int. Cl.: C09K 17/40, B09B 3/00

(54) **Quellfähige Smektit-Dichtschicht**

(30) Priorität: 27.05.1994 DE 4418646
(71) Anmelder: SÜD-CHEMIE AG, D-80333 München (DE)
(72) Erfinder: Hähn, Reinhard, Dr., D-84186 Vilsheim (DE); Schall, Norbert, Dr., D-85465 Langenpreising (DE)
(74) Vertreter: Patentanwälte Dipl.-Ing. R. Splanemann Dr. B. Reitzner Dipl.-Ing. K. Baronetzky

(57) **Zusammenfassung**

Beschrieben wird eine quellfähige Smektit-Dichtschicht, die dadurch gekennzeichnet ist, daß der Smektit mit einem nichtionischen, organischen Wasserretentionsmittel, das den Gefrierpunkt des Wassers erniedrigt, oberflächenmodifiziert ist, wobei das Wasserrentionsmittel in einer Menge von etwa 3 bis 30 Gew.-%, bezogen auf den Trockensubstanzgehalt des Smektits, vorliegt.

## Beschreibung

Die Erfindung betrifft eine quellfähige Smektit-Dichtschicht mit verbesserter Wasserretention und Frostbeständigkeit.

Es ist Stand der Technik, natürliche Böden oder Sande mit Smektiten, wie Bentonit, Zu durchmischen, um hierdurch die Wasserdurchlässigkeit der so vergüteten Schicht herabzusetzen.

Der Bentonit wird entweder mit dem Erdreich oder mit Sand vermischt. Dies kann entweder durch Einfräsen des Bentonits oder durch einen separaten Mischvorgang erfolgen. Die auf die Deponiebasisfläche aufgebrachte Mischung wird mit Wasser angefeuchtet. Anschließend wird die Mischung mechanisch verdichtet. Der eingearbeitete Bentonit ist als Dichtmaterial deshalb besonders geeignet, weil mit wasserdurchlässigen Sanden und Böden eine günstige Korngrößenverteilung erzeugt wird. Weiterhin verfüllt der Bentonit durch seine Quellwirkung vorhandene Hohlräume, was ebenfalls einen entscheidenden Beitrag zur Verringerung der Wasserdurchlässigkeit darstellt.

Über der mit Bentonit vergüteten Schicht wird üblicherweise eine HDPE-Folie (HDPE = Polyethylen mit hoher Dichte) verlegt, auf der sich wiederum eine Drainageschicht für Deponiesickerwässer befindet. Oberhalb der Drainageschicht wird üblicherweise der Abfall abgelagert.

Eine weitere Anwendungsform von Bentonit als Dichtschicht für Wasser sind die sogenannten Bentonit-Geotextil-Matten. Diese werden z.B. als Deponiebasisabdichtung oder zur Oberflächenabdichtung von Deponien verwendet.

Ein weiteres Anwendungsgebiet für Dichtschichten und Dichtmatten ist die Horizontalabdichtung sogenannter Tank-Farms. Tank-Farms sind oberirdisch angelegte Tanklager, die als Barriere gegen aus den Tanks auslaufende Flüssigkeiten horizontal mit Bentonit-Geotextil-Matten ausgelegt oder mit Bentonit-Dichtschichten versehen werden. Die Dichtschicht oder Matte wird in diesem Fall mit Sand/Kies überlagert und bewässert, damit der Bentonit ausquellen und seine Dichtwirkung entfalten kann.

Ein weiteres Beispiel, bei dem Bentonite als Dichtschichten verwendet werden, ist die Abdichtung von Arbeitsflächen, auf denen Flüssigkeiten umgefüllt werden (z.B. Tankstellenabdichtungen).

In allen Fällen muß der Bentonit bewässert werden, damit er quellen kann. Insbesondere bei trockenen klimatischen Bedingungen kann die ursprünglich bewässerte Bentonit-Dichtschicht wieder austrocknen. Hierbei können Schrumpfrisse entstehen, die zu Undichtigkeiten führen. Andererseits sollen Bentonit enthaltende Dichtschichten vor allem in der Bauphase keinen Temperaturen ausgesetzt werden, bei denen das zur Quellung des Bentonits enthaltene Wasser gefrieren kann. Auch in diesem Fall würden nach dem Auftauen Undichtigkeiten entstehen.

Die EP-A-05 42 266 beschreibt Organotonzusammensetzungen, die das Reaktionsprodukt aus (a) einem smektitischen Ton, b) einem ersten organischen Kation und (c) einem zweiten organischen Kation aus einer polyalkoxylierten quaternären Ammoniumsalz darstellen. Der organophile Ton wird als Verdickungsmittel in Lacken und Farben sowie in Bohrspülmitteln eingesetzt. Die Anwendung als Dichtschicht ist nicht erwähnt. Außerdem wird kein Wasserretentionsmittel verwendet, da die quaternären Ammoniumsalze den Ton hydrophobieren. Außerdem wird der organophile Ton nicht in Geotextilmatten verwendet.

Die US-A-4 669 920 beschreibt eine Boden-Abdichtmasse, mit der Wasser, das mit Elektrolyten verunreinigt ist, zurückgehalten werden soll. Die Masse enthält einen quellfähigen Ton und ein in Wasser lösliches oder in Wasser quellbares Copolymer mit einem Molekulargewicht von mindestens 500.000, das die Dichtwirkung des quellfähigen Tons gegenüber salzhaltigen Flüssigkeiten verbessern soll. Das Copolymer erniedrigt wegen seines hohen Molekulargewichts den Gefrierpunkt des Systems nicht.

Die US-A-4 103 499 beschreibt eine Geotextilmatte, welche Bentonit sowie ein wasserlösliches Dispergiermittel, z.B. ein Salz der Essigsäure, enthält. Mit Hilfe des Dispergiermittels soll die Wasserdurchlässigkeit der Bentonit-Geotextilmatten vermindert werden, insbesondere wenn das Wasser Salze und andere Elektrolyte enthält. Das wasserlösliche Dispergiermittel stellt eine ionische Verbindung dar.

Die DE-C-3 703 066 beschreibt eine Vorrichtung zum Verbinden von in eine Dichtungswand einzubauenden Dichtungsplatten. Die Dichtungsplatten sind vorzugsweise aus Kunststoff und sind an ihren vertikalen Seitenwänden mit Kupplungshälften versehen, die unter Bildung eines kontrollierbaren Hohlraumes formschlüssig ineinandergreifen und über eine Dichtleiste verfügen. Es handelt sich hierbei nicht um Bentonit-Geotextilmatten.

Die DE-A-3 910 788 beschreibt ein Kunststoffschloß zur Verbindung zweier Abdichtungsbahnen in Form von zwei extrudierten Profilen. Das Kunststoffschloß wird nicht in Verbindung mit Bentonit-Geotextilmatten verwendet.

Die DE-A-4 221 329 beschreibt eine Dichtungsmatte, nämlich eine Bentonit-Geotextilmatte. Es ist nichts darüber gesagt, daß der Bentonit oberflächenmodifiziert ist. Außerdem sind die einzelnen Matten nicht durch Schloßmechanismen miteinander verbunden.

Die DE-A-4 203 861 beschreibt eine wasser- und/oder ölundurchlässige Dichtungsmatte aus einem porösen Material, in dessen Poren quellfähiger Ton eingelagert ist, und die beidseitig mit Deckschichten versehen ist. Über eine Oberflächenmodifizierung des Bentonits finden sich keine Angaben. Im Überlappungsbereich zwischen zwei Matten ist kein Schloßmechanismus vorgesehen.

Die DE-A-1 634 344 betrifft ein Verfahren zur Beseitung der Verschmutzungsgefahr von Grundwasser, insbesondere durch Mineralölprodukte, wobei auf dem Boden oder unmittelbar unter der Bodenoberfläche Adsorptionsschichten aus thermisch expandierten Perliten mit Schüttgewichten über 100 g/l, die anschliessend verdichtet werden, eingesetzt werden. Die Perlite werden durch hydrophobe organophile Überzüge modifiziert.

Die DE-C-1 269 602 betrifft ein Verfahren zur Verbesserung der Eigenschaften von Perlit, insbesondere zur Verbesserung der Staubbindung, wobei die einzelnen Perlitkörner mit organischen hygroskopischen Verbindungen beschichtet werdne. Perlite sind im Gegensatz zu Smektiten nicht quellfähig.

Aus "Patent Abstracts of Japan", 61-44990-A, C-108, 19. Juli 1993, Vol. 17, Nr. 382 sind Dichtungsmittel für die Ränder von Dichtplatten bekannt, die durch Zugabe eines Knetmaterials (vorzugsweise Diethylenglykol, Glycerin usw.) mit einem Natriumbentonit erhalten werden. Das Knetmaterial wird in einer Menge von mehr als 45% verwendet, so daß das Knetgemisch die Konsistenz einer Paste hat und somit nicht als selbsttragende Dichtschicht verwendet werden kann.

Aus "Patent Abstracts of Japan", 6-65483A, C-1085, 19. Juli 1993, Vol. 17, Nr. 382 ist ein Bodenfüllstoff bekannt, der in der Lage ist, der Bewegung von Spalten im Boden zu folgen, indem er quillt. Der Füllstoff wird durch Vermischen eines wasserabsorbierenden quellfähigen hochmolekularen Materials (z.B. eines Vinylalkohol/Acrylsäure-Polymers oder eines Stärke/Acrylsäure-Polymers) mit einem Mineralpulver (z.B. Sand oder Tonpulver) erhalten. Bei den hochmolekularen Zusätzen handelt es sich um anionische Verbindungen.

Aufgabe der Erfindung ist die Bereitstellung einer Smektit-, insbesondere Bentonit-Dichtschicht, die gegen Austrocknung und Gefrieren geschützt ist.

Überraschenderweise wurde gefunden, daß quellfähige Smektit-Dichtschichten dadurch erhalten werden können, daß der Smektit mit einem nichtionischen organischen Wasserretentionsmittel, das den Gefrierpunkt des Wassers erniedrigt, oberflächenmodifiziert ist, wobei das Wasserretentionsmittel in einer Menge von etwa 3 bis 30 Gew.-%, bezogen auf den Trockensubstanzgehalt des Smektits, vorliegt. Durch das Wasserretentionsmittel wird die Austrocknungsneigung und Frostanfälligkeit des Smektits deutlich reduziert.

Vorzugsweise stellt das Wasserretentionsmittel einen mehrwertigen Alkohol, insbesondere Glycerin, Glykol, Diglykol, einen Polyglykol, oder einen Polyetherglykol dar.

Zur Konservierung des Wasserretentionsmittels können etwa 0,1 bis 0,5 Gew.-% Konservierungsmittel zugesetzt werden. Als Konservierungsmittel können z.B. Isothiazolinderivate, p-Chlor-m-Kresol, Chloracetamid, Benzoate und Dithiocarbonate verwendet werden.

Der Smektit stellt vorzugsweise einen Montmorillonit, Beidellit, Saponit, Hektorit oder deren Gemische dar.

Die erfindungsgemäße Dichtschicht kann ferner 1 bis 10 Gew.-% eines organophilen Smektits auf 10 bis 99 Gew.-% quellfähigen Smektit enthalten.

Der organophile Smektit ist das Reaktionsprodukt eines anorganischen Smektits, vorzugsweise eines in Wasser quellfähigen Smektits, mit einer kationischen organischen Verbindung, vorzugsweise einer quaternären Ammoniumverbindung. Beispiele für geeignete quaternäre Ammoniumverbindungen sind Dimetheyl-Ditalg-Ammoniumchlorid, wobei der Talg-Alkylrest in hydrierter Form vorliegt, oder Benzyl-Talg-Dimethylammoniumchlorid. Die zur Umsetzung benötigte Menge des organischen Kations sollte etwa zwischen 30 und 120 mVal/100 g anorganischen Smektit betragen.

Der mit dem Wasserretentionsmittel modifizierte Smektit kann
(a) in Geotextil-Smektit-Matten eingearbeitet sein; oder
(b) im Gemisch mit Sand Kies, Erdreich, Asche und/oder niedrigquellenden Tonmineralien vorliegen.

Gegenstand der Erfindung ist ferner ein Verfahren zur Herstellung einer quellfähigen Smektit-Dichtschicht, das dadurch gekennzeichnet ist, daß man das organische Wasserretentionsmittel
(a) allein oder zusammen mit etwa 2 bis 20 Gew.-% Wasser in vorgekneteten, gemahlenen Smektit einknetet oder aufsprüht oder
(b) in grubenfeuchten Smektit einknetet
und das Gemisch gegebenenfalls trocknet und/oder mahlt.

Das erhaltene Gemisch wird durch Trocknung vorzugsweise auf einen Restwassergehalt von etwa 3 bis 15 Gew.-% gebracht.

Das erhaltene Gemisch quillt beim Bewässern an, wobei eine Masse mit guter Plastizität erhalten wird (Wassergehalt etwa 15-30 Gew.-%).

Setzt man diese Masse trockener, warmer Luft aus, so gibt diese deutlich langsamer Wasser ab als in Wasser gequollener, unbehandelter Smektit. Dieser Effekt wird umso ausgeprägter je mehr Wasserretentionsmittel eingeknetet wurde.

Setzt man das in Wasser gequollene, mit dem Wasserretentionsmittel behandelte Produkt Temperaturen unterhalb des Gefrierpunktes aus, so wird ein Gefrieren erst bei Temperaturen unter 0°C beobachtet.

Gegenstand der Erfindung ist ferner die Verwendung der vorstehend beschriebenen Dichtschichten
(a) zur Deponiebasisabdichtung;
(b) zur Deponieoberflächenabdichtung;
(c) zur Abdichtung von Tank-Farms; oder
(d) zur Herstellung von Tankstellenabdichtungen.

Mit Wasserretentionsmitteln behandelter Smektit weist bei diesen Anwendungen eine geringere Austrocknungsneigung und eine verbesserte Froststabilität auf.

Gegenstand der Erfindung ist schließlich eine Geotextilmatte, die mindestens eine Dichtschicht, wie sie vorstehend definiert ist, enthält.

Unter Geotextilien, die als Gewebe oder als Vlies ausgeführt sein können, versteht man Schichten aus nicht oder nur schwer verrottbaren Kunststoffasern, z.B. aus Polypropylen, Polyethylen, Polyvinylchlorid oder Polyamiden (im Gegensatz zu leicht verrottbaren Textilmaterialien, wie Baumwolle, Zellstoff, usw.). Zwischen den Geotextilschichten ist eine Dichtschicht mit einer Dicke von etwa 2 bis 5 mm aus in Wasser quellfähigem Smektit (Pulver oder Granulat) eingebracht. Der Smektit kann durch Klebstoffe (z.B. Leim) oder Vernadeln der Geotextilschichten zwischen den Geotextilschichten fixiert sein, wobei auch die mechanische Stabilität beim Einbau verbessert wird.

In der Matte kann die Dichtschicht mit den Geotextilschichten verleimt sein, und die Geotextilschichten können gegebenenfalls miteinander vernadelt sein.

Ferner kann die Matte in Form einer Bahn vorliegen, die an jedem Seitenrand einen Schloßmechanismus zum dichten Verbinden der Bahn mit einer anderen Bahn, die einen komplementären Schloßmechanismus an jedem Seitenrand besitzt, aufweist.

Der Schloßmechanismus kann an den Seitenrändern der Bahnen angebrachte Profile aufweisen, wobei die Profile der einen Bahn in die Profile der anderen Bahn eingreifen.

Die Profile können (a) selbstdichtend oder (b) durch Dichtmittel abdichtbar sein.

Diese Schloßmechanismen sind in der deutschen Patentanmeldung P 44 18 629.0 beschrieben, die als Referenz Teil der vorliegenden Beschreibung bilden soll.

Die Erfindung ist durch die nachstehenden Beispiele erläutert.

### Beispiele 1 und 2

Je 1 kg quellfähiger Natriumbentonit in Pulverform (Montigel®F mit 90 Gew.-% Bentonit und 10 Gew.-% Wasser wurden in einem Zwangsmischer mit 23 bzw. 13 Gew.-% Glycerin (bezogen auf Trockensubstanz Bentonit) versetzt. Es wurde in beiden Fällen eine fließfähiges Pulver erhalten.

Jeweils 100 g des mit 23 bzw. mit 13 Gew.-% Glycerin behandelten Bentonits sowie des nicht mit Glycerin behandelten Bentonits wurden in einem Doppelwellenmischer mit jeweils 50 g destilliertem Wasser verknetet.

Die erhaltenen plastischen Massen wurden in Petrischalen mit einem Durchmesser von 10 cm verbracht und 20 h bei Raumtemperatur (20°C) gelagert.

Anschließend wurden die Petrischalen bei einer Temperatur von 50°C in einem Umluft-Trockenschrank gelagert. Die Gewichtsverluste wurden in den in der nachfolgenden Tabelle angegebenen Zeitabstäenden geprüft.

**Tabelle**

| Gewichtsverlust | | | | |
|---|---|---|---|---|
| Zeit (h)/T (°C) | | Bentonit + 0%Glycerin | Beispiel 1 Bentonit + 13% Glycerin | Beispiel 2 Bentonit + 23% Glycerin |
| 20 | 20 | 8 | 5 | 4 |
| 21 | 50 | 9 | 5,3 | 4,2 |
| 22 | 50 | 10 | 5,8 | 4,5 |
| 23 | 50 | 11 | 6,5 | 4,8 |
| 24 | 50 | 12 | 7,1 | 5,2 |
| 25 | 50 | 13 | 7,8 | 5,7 |
| 26 | 50 | 14 | 8,9 | 6,2 |
| 27 | 50 | 15 | 10,1 | 6,7 |
| 28 | 50 | 16 | 11 | 7,5 |
| 42 | 50 | 32 | 19,5 | 14 |
| 50 | 50 | 34 | 23 | 17,5 |
| 66 | 50 | 35 | 31,5 | 22,5 |
| 80 | 50 | 35 | 34 | 28 |
| 150 | 50 | 35 | 34,5 | 33 |

Wie aus der Tabelle ersichtlich ist, verdunsten bei der nicht mit Glycerin behandelten Probe bereits bei 20°C 8 Gew.-% Wasser, bei den Glycerin enthaltenen Proben hingegen nur 4 bis 5 Gew.-%.

Nach 42 h zeigte sich bei der unbehandelten Probe ein Gewichtsverlust von etwa 32%; die Probe, die mit 13 Gew.-% Glycerin behandelt wurde, zeigt einen Gewichtsverlust von nur 19%, die mit 23 Gew.-% Glycerin behandelte Probe verliert 14 Gew.-%.

Nach Ablauf von insgesamt 150 h nähern sich die Gewichtsverluste auf einen Wert von 33-35% einander an.

Es ist klar ersichtlich, daß der mit Glycerin behandelte Bentonit wesentlich weniger zur Wasserabgabe neigt. Im optischen Aussehen war die nicht mit Glycerin behandelte Probe nach 150h spröde und von vielen Schrumpfungsrissen durchzogen. Die mit Glycerin behandelten Proben waren plastisch und zeigten weniger Schrumpfungsrisse.

Es wurden weitere Proben nach den Beispielen 1 und 2 24 h bei einer Temperatur von -10°C im Gefrierschrank aufbewahrt. Danach wurden die Proben entnommen, um zu prüfen, ob sie gefroren waren.

Es wurde gefunden, daß die nicht mit Glycerin behandelte Proben hartgefroren und spröde waren. Die mit Glycerin behandelten Proben bleiben plastisch und waren nicht gefroren.

## Patentansprüche

1. Quellfähige Smektit-Dichtschicht, dadurch gekennzeichnet, daß der Smektit mit einem nichtionischen organischen Wasserretentionsmittel, das den Gefrierpunkt des Wassers erniedrigt, oberflächenmodifiziert ist, wobei das Wasserretentionsmittel in einer Menge von etwa 3 bis 30 Gew.-%, bezogen auf den Trockensubstanzgehalt des Smektits, vorliegt.

2. Dichtschicht nach Anspruch 1, dadurch gekennzeichnet, daß das Wasserretentionsmittel einen mehrwertigen Alkohol, insbesondere Glycerin, Glykol, Diglykol, einen Polyglykol, oder einen Polyetherglykol darstellt.

3. Dichtschicht nach einem der Ansprüche 1 oder 2, dadurch gekennzeichnet, daß das organische Wasserretentionsmittel etwa 0,1 bis 0,5 Gew.-% eines Konservierungsmittels enthält.

4. Dichtschicht nach einem der Ansprüche 1 bis 3, dadurch gekennzeichnet, daß der Smektit einen Montmorillonit, Beidellit, Saponit, Hektorit oder deren Gemische darstellt.

5. Dichtschicht nach einem der Ansprüche 1 bis 4, dadurch gekennzeichnet, daß sie 1 bis 10 Gew.-% eines organophilen Smektits auf 10-99 Gew.-% quellfähigen Smektit enthält.

6. Dichtschicht nach einem der Ansprüche 1 bis 5, dadurch gekennzeichnet, daß der mit dem Wasserretentionsmittel modifizierte Smektit
(a) in Geotextil-Smektit-Matten eingearbeitet ist; oder
(b) im Gemisch mit Sand Kies, Erdreich, Asche und/oder niedrigquellenden Tonmineralien vorliegt.

7. Verfahren zur Herstellung einer quellfähigen Smektit-Dichtschicht nach einem der Ansprüche 1 bis 6, dadurch gekennzeichnet, daß man das organische Wasserretentionsmittel
(a) allein oder zusammen mit etwa 2 bis 20 Gew.-% Wasser in vorgekneteten, gemahlenen Smektit einknetet oder aufsprüht oder
(b) in grubenfeuchten Smektit einknetet
und das Gemisch gegebenenfalls trocknet und/oder mahlt.

8. Verwendung der Dichtschichten nach einem der Ansprüche 1 bis 8
(a) zur Deponiebasisabdichtung;
(b) zur Deponieoberflächenabdichtung;
(c) zur Abdichtung von Tank-Farms; oder
(d) zur Herstellung von Tankstellenabdichtungen.

9. Geotextil-Smektit-Matte, enthaltend mindestens eine Dichtschicht nach einem der Ansprüche 1 bis 6.

10. Matte nach Anspruch 9, dadurch gekennzeichnet, daß die Dichtschicht mit den Geotextilschichten verleimt ist und die Geotextilschichten gegebenenfalls miteinander vernadelt sind.

11. Matte nach Anspruch 9 oder 10 in Form einer Bahn, die an jedem Seitenrand einen Schloßmechanismus zum dichten Verbinden der Bahn mit einer anderen Bahn, die einen komplementären Schloßmechanismus an jedem Seitenrand besitzt, aufweist.

12. Matte nach Anspruch 11, dadurch gekennzeichnet, daß der Schloßmechanismus an den Seitenrändern der Bahnen angebrachte Profile aufweist, wobei die Profile der einen Bahn in die Profile der anderen Bahn eingreifen.

13. Matte nach Anspruch 12, dadurch gekennzeichnet, daß die Profile (a) selbstdichtend oder (b) durch Dichtmittel abdichtbar sind.
